# EUROPÄISCHE PATENTSCHRIFT

(11) **EP 1 759 897 B1**
(45) Veröffentlichungstag und Bekanntmachung des Hinweises auf die Patenterteilung: **21.07.2010**
(21) Anmeldenummer: 06015754.2
(22) Anmeldetag: 28.07.2006
(51) Int. Cl.: B60H 1/00

(54) **Luftstromschalteinrichtung**
Air stream switching device
Dispositif de distribution d'air

(30) Priorität: 01.09.2005 DE 102005041725
(43) Veröffentlichungstag der Anmeldung: 07.03.2007
(73) Patentinhaber: Behr GmbH & Co. KG, 70469 Stuttgart (DE)
(72) Erfinder: Komowski, Michael, 71263 Weil der Stadt (DE)

(56) Entgegenhaltungen:
- EP-A2- 0 858 919
- EP-A2- 1 308 325
- DE-A1- 19 753 617
- DE-A1- 19 817 896
- FR-A- 2 579 530
- US-A1- 2004 067 728

## Beschreibung

Die Erfindung betrifft eine Luftstromschalteinrichtung gemäß dem Oberbegriff des Anspruches 1.

Aus der EP 1 308 325 A2 ist eine Luftstromschalteinrichtung zum Schalten einer einen ersten Luftkanal mit einem zweiten Luftkanal und einem dritten Luftkanal verbindenden Verbindungsöffnung, insbesondere in einer Heizungs-, Lüftungs- oder Klimaanlage für den Innenraum eines Kraftfahrzeugs, bekannt, mit einer um eine Schwenkachse schwenkbar gelagerten Schaltklappe, die quer zur Schwenkachse einen Querschnitt mit einem zur Schwenkachse hin konkaven Kreissegmentabschnitt aufweist. Dabei ist die Schaltklappe so angeordnet, dass in einer ersten Endstellung der Schaltklappe der erste Luftkanal mit dem zweiten Luftkanal kommuniziert, während der dritte Luftkanal gesperrt ist, in einer zweiten Endstellung der Schaltklappe der erste Luftkanal mit dem dritten Luftkanal kommuniziert, während der zweite Luftkanal gesperrt ist, und in wenigstens einer zwischen den Endstellungen liegenden Zwischenstellung der Schaltklappe der erste Luftkanal sowohl mit dem zweiten als auch mit dem dritten Luftkanal mehr oder weniger kommuniziert, wobei die Schaltklappe so gelagert ist, dass der Kreismittelpunkt des Kreissegmentabschnitts mit der Schwenkachse zusammenfällt. Eine derartige Luftstromschalteinrichtung lässt noch Wünsche offen.

Die US 2004/0067728 A1 zeigt eine Luftstromschalteinrichtung gemäß dem Oberbegriff des Anspruchs 1.

Es ist Aufgabe der Erfindung, eine verbesserte Luftstromschalteinrichtung zur Verfügung zu stellen. Diese Aufgabe wird gelöst durch eine Luftstromschalteinrichtung mit den Merkmalen des Anspruchs 1. Vorteilhafte Ausgestaltungen sind Gegenstand der Unteransprüche.

Erfindungsgemäß ist eine Luftstromschalteinrichtung zum Schalten einer einen ersten Luftkanal mit einem zweiten Luftkanal und einem dritten Luftkanal verbindenden Verbindungsöffnung, insbesondere in einer Heizungs-, Lüftungs- oder Klimaanlage für den Innenraum eines Kraftfahrzeugs, vorgesehen, mit einer um eine Schwenkachse schwenkbar gelagerten Schaltklappe, wobei die Schaltklappe so angeordnet ist, dass in einer ersten Endstellung der Schaltklappe der erste Luftkanal mit dem zweiten Luftkanal kommuniziert, während der dritte Luftkanal gesperrt ist, in einer zweiten Endstellung der Schaltklappe der erste Luftkanal mit dem dritten Luftkanal kommuniziert, während der zweite Luftkanal gesperrt ist, und in wenigstens einer zwischen den Endstellungen liegenden Zwischenstellung der Schaltklappe der erste Luftkanal sowohl mit dem zweiten als auch mit dem dritten Luftkanal in einem einstellbaren Verhältnis kommuniziert, wobei die Schaltklappe durch mindestens drei Segmente gebildet ist, von denen mindestens eines in einer der Endstellungen den einen Luftkanal zumindest bereichsweise gegenüber den anderen beiden Luftkanälen verschließt, wobei dieser Luftkanal durch zumindest eine Teilfläche der Schaltklappe vollständig verschlossen ist, und sämtliche Segmente durch Ebenen und/oder Kurvenflächen, die nicht konzentrisch zur Schwenkachse sind, gebildet sind. Somit fallen sämtliche Krümmungsmittelpunkte von Kurven, welche die Segmente bilden, nicht auf die Schwenkachse der Schaltklappe, insbesondere sind keine bezüglich der Schwenkachse konzentrischen, eine wesentliche - d.h. über 50%, insbesondere über 25%, besonders bevorzugt über 10% - der Gesamtaußenfläche der Schaltklappe einnehmenden Hohlzylinderabschnitte Teil der erfindungsgemäßen Schaltklappe. Vorzugsweise liegen keine zur Schwenkachse konzentrischen Bereiche vor.

Erfindungsgemäß sind drei Segmente vorgesehen, wobei zwischen den einzelnen Segmenten auch Übergangsbereiche in Form von Radien oder anderen abgerundeten Übergängen vorgesehen sein können. Dabei weisen auch die Übergangsbereiche bevorzugt keinen zur Schwenkachse konzentrischen Bereich auf.

Im Bereich des Übergangs von einem Segment zu einem anderen, benachbarten Segment ist erfindungsgemäß ein nach außen überstehender Rand vorgesehen, welcher Anlage- und/oder Abdichtfunktionen erfüllen kann.

Erfindungsgemäß ist mindestens ein äußeres Segmentende mit einem nach außen in radialer Richtung überstehenden Rand ausgebildet, welcher in der entsprechenden Endstellung als Anschlag und/oder Anlagefläche an das Gehäuse dient.

Bevorzugt weisen die Übergangsbereiche und/oder mindestens ein Segment eine Krümmung nach außen auf, so dass die entsprechenden Krümmungsmittelpunkte auf der Außenseite der Schaltklappe liegen.

Mindestens eines der Segmente, vorzugsweise jedoch alle Segmente und Übergangsbereiche, können neben der Krümmung in Umfangsrichtung auch entlang Schnittebenen, von denen die Schwenkachse Teil ist, also in Längsrichtung der Schaltklappe, eine Krümmung und/oder einen nicht parallelen Verlauf bezüglich der, Schwenkachse aufweisen. Dies ermöglicht eine optimierte Anpassung an schwierige Bauvorgaben in Folge stark eingeengter Bauräume.

Bevorzugt ist mindestens ein Segment, vorzugsweise ein innen angeordnetes oder das mittlere Segment über zumindest einen wesentlichen Bereich seiner Fläche eben ausgebildet. Dies ermöglicht ein gutes Vorbeiströmen von Luft auf der Außenseite der Schaltklappe, was für bestimmte Verwendungszwecke von Vorteil sein kann.

Die Schaltklappe ist vorzugsweise asymmetrisch bezüglich der Mittelebene senkrecht zur Schwenkachse ausgebildet, um die Schaltklappe auch bei schwierigen vorgegebenen Geometrien der Bauräume verwenden zu können. So können insbesondere endseitige Abschrägungen und/oder Abrundungen vorgesehen sein, welche vorzugsweise Teil aller Segmente und ggf. auch der Übergangsbereiche sind.

Bevorzugt ist mindestens eine versteifende Rippe, insbesondere auf der Schaltklappeninnenseite vorgesehen. Dabei kann die Rippe vorzugsweise in Umfangsrichtung verlaufend und/oder parallel zur Schwenkachse verlaufend ausgebildet sein.

Im Folgenden wird eine Luftstromschalteinrichtung anhand mehrerer Ausführungsbeispiele unter Bezugnahme auf die Zeichnung im Einzelnen erläutert. Es zeigen:
- Fig. 1: eine perspektivische Ansicht einer Schaltklappe gemäß dem Ausführungsbeispiel, der Erfindung.
- Fig. 2: eine Seitenansicht der Schaltklappe in Richtung des Pfeiles II von Fig. 1,
- Fig. 3: einen Längsschnitt durch die Schaltklappe von Fig. 1 entlang Linie III-III von Fig. 2,
- Fig. 4: eine Seitenansicht der Schaltklappe in Richtung des Pfeils IV in Fig. 1,
- Fig. 5: einen Schnitt durch die Schaltklappe von Fig. 1 entlang Linie V-V von Fig. 4,
- Fig. 6: eine Draufsicht auf die Schaltklappe von Fig. 1,
- Fig. 7: einen Schnitt quer durch eine nicht erfindungsgemäße Luftstromschalteinrichtung mit Schaltklappe,
- Fig. 8: eine perspektivische Ansicht der Schaltklappe von Fig. 7,
- Fig. 9: einen Schnitt quer durch eine weitere Luftstromschalteinrichtung mit Schaltklappe,
- Fig. 10: eine schematische Darstellung einer Mehrzahl möglicher Ausgestaltungsformen eines Segments einer Schaltklappe im Längsschnitt.

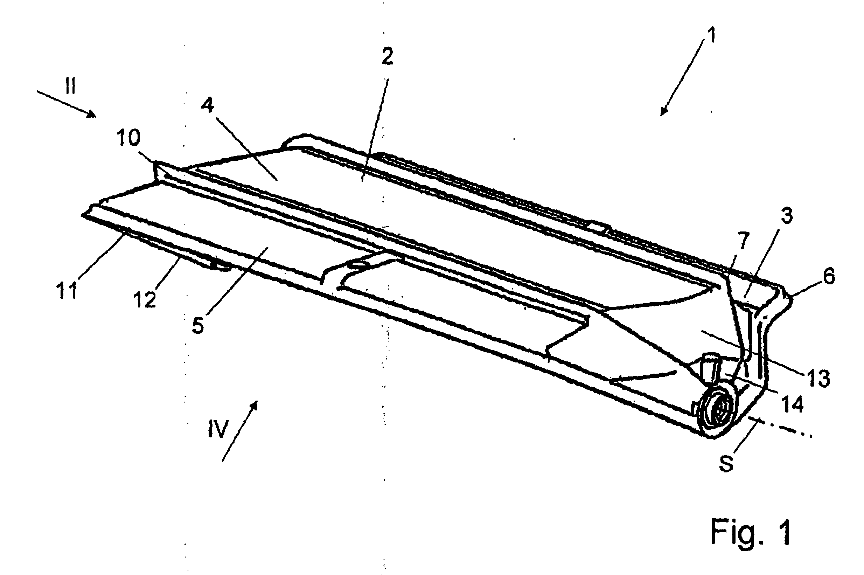

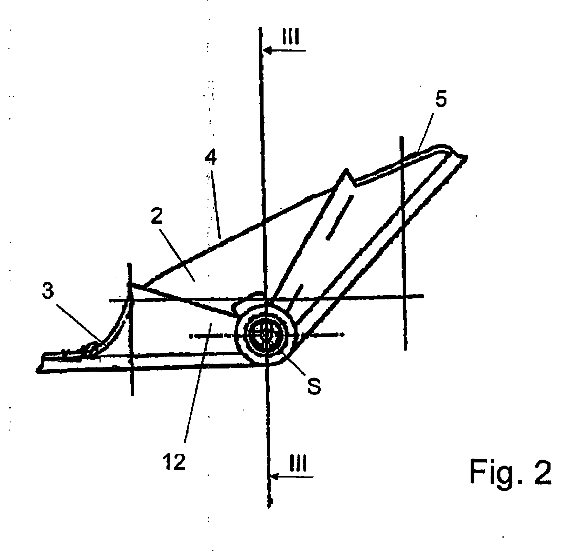

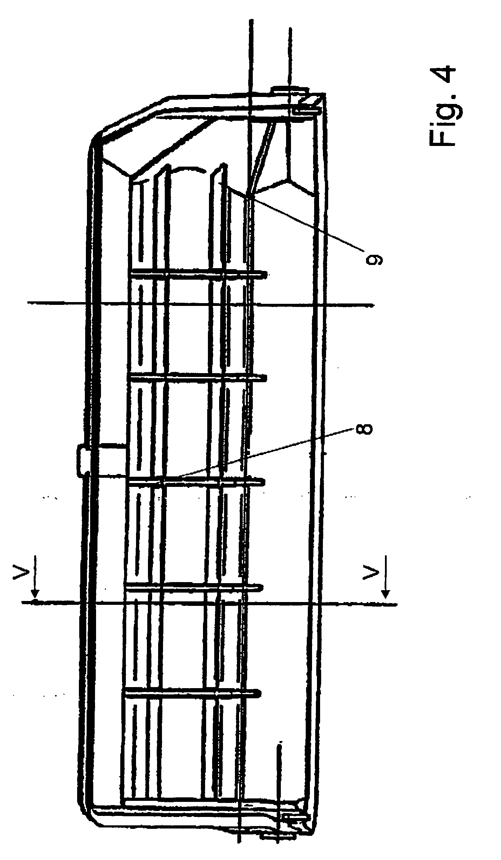

Gemäß dem ersten, in den Figuren 1 bis 6 dargestellten Ausführungsbeispiel ist eine als Luftstromschalteinrichtung 1 dienende, asymmetrische Schaltklappe 2 vorgesehen, welche als um eine Schwenkachse S verschwenkbare Segmentklappe ausgebildet ist und vorliegend zur Regelung der Luftzufuhr zu einem die Luft ansaugenden Gebläse eines Kraftfahrzeugbelüftungssystems dient, wobei es - je nach Bedarf - den Frischluft- und/oder den Umluftkanal öffnet bzw. verschließt. Dabei ist in den beiden Endstellungen jeweils einer der Luftkanäle vollständig verschlossen und der andere Luftkanal maximal geöffnet. In Zwischenstellungen kann Luft beider Luftkanäle dem Gebläse zugeführt werden, wobei auf Grund der im Folgenden näher beschriebenen Geometrie der Schaltklappe 2 Luft auf beiden Seiten der Schaltklappe 2 vorbeiströmen kann.

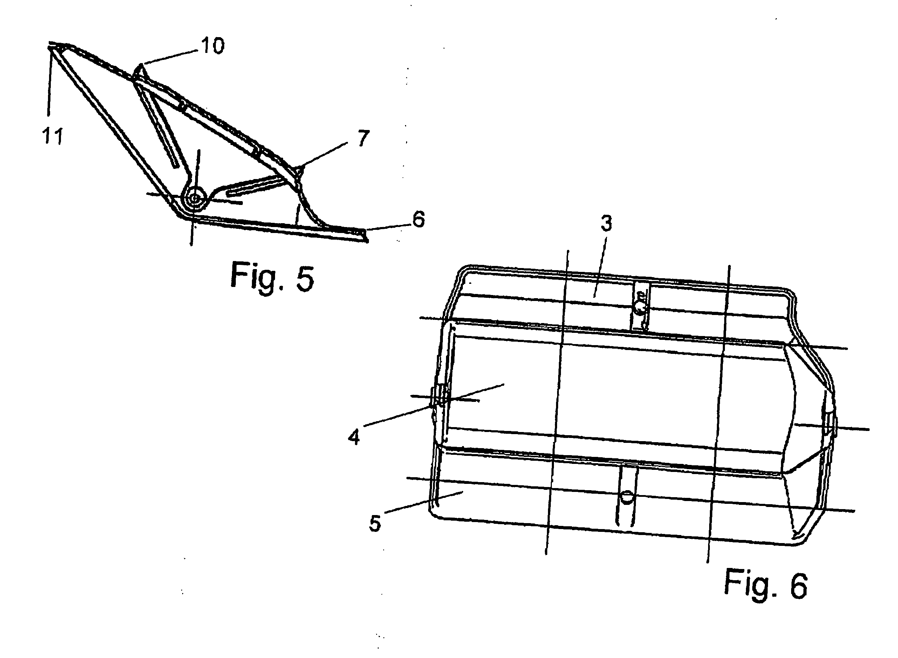

Die Schaltklappe 2 weist drei Segmente 3, 4 und 5 auf. Das erste Segment 3 ist zum in radialer Richtung nach außen überstehenden Ende, gebildet durch einen Teil eines umlaufenden ersten Randes 6, mit einem Radius gekrümmt ausgebildet. Zwischen dem ersten und zweiten Segment 3 und 4 ist ein zweiter, nach außen überstehender Rand 7 vorgesehen, welcher im Wesentlichen parallel zur Schwenkachse S verlaufend angeordnet ist (vgl. Fig. 6), wobei die Richtung der Erstreckung nach außen jedoch nicht in radialer Richtung bezüglich der Schwenkachse S sondern im Wesentlichen senkrecht zur Fläche des zweiten Segments 4 ist. Das zweite Segment 4 ist im Wesentlichen eben ausgebildet, wobei vorliegend fünf in äquidistanten Abständen zueinander versteifende Querrippen 8 auf der schwenkachsenseitigen Fläche in Ebenen senkrecht zur Schwenkachse S verlaufend angeordnet sind. Ferner sind schwenkachsenseitig am zweiten Segment 4 zwei parallel zur Schwenkachse S verlaufende Längsrippen 9 vorgesehen, welche die Querrippen 8 schneiden und die gleiche Höhe wie dieselben aufweisen.

Zwischen dem zweiten und dritten Segment 4 und 5 ist ein dritter Rand 10 vorgesehen, der nach außen übersteht, wobei er etwa parallel zum zweiten Rand 7 und somit etwa senkrecht zur Fläche des zweiten Segments 4 und nicht in radialer Richtung überstehend ausgebildet ist (siehe Fig. 5). Das dritte Segment 5 erstreckt sich vorliegend etwa in Verlängerung des zweiten Segments 4, wobei es in Verlängerung der Querrippen 8 in Schwenkachsenrichtung versetzt zum zweiten Segment 4 angeordnet ist und in einem vierten Rand 11 endet.

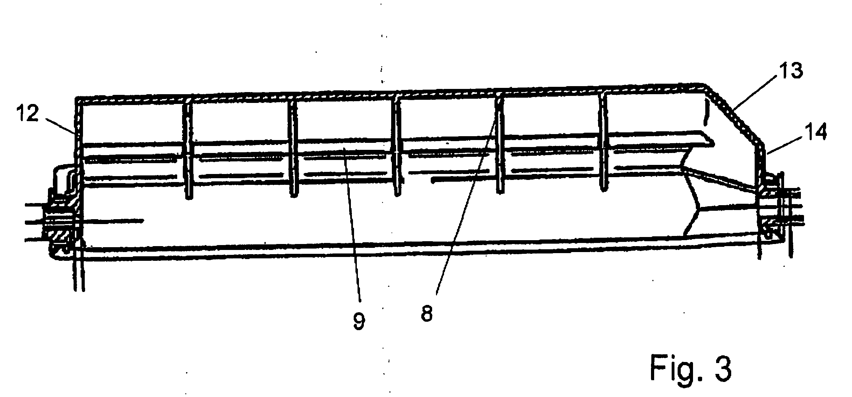

Seitlich enden die Segmente 3, 4 und 5 auf der in Fig. 3 links dargestellten Seite in einer Ebene 12 senkrecht zur Schwenkachse S. Auf der anderen Seite ist eine 45°-Abschrägung 13 vor dem auf dieser Seite vorgesehenen Ende der Schaltklappe 2 in einer seitlich abschließenden, zweiten Ebene 14, die senkrecht zur Schwenkachse S verläuft, vorgesehen. Das erste Segment 3 ragt nur leicht in radialer Richtung im Bereich der Abschrägung 13 (siehe Fig. 6, rechte Seite oben). Der zweite und der dritte Rand 7 und 10 enden jeweils am seitlichen Ende der entsprechenden Segmente 3, 4 und 5.

Die äußeren Ränder 6 und 11 dienen in den Endstellungen als Anschläge und Anlageflächen, die in Anlage an entsprechende Anlageflächen der Luftkanäle gelangen und so ein Vorbeiströmen von Luft verhindern. Die inneren Ränder 7 und 10 dienen - bei entsprechender Ausgestaltung der Luftkanäle - ebenfalls als Anlageflächen, die ein Vorbeiströmen von Luft in den Endstellungen verhindern und in den Zwischenstellungen behindern. Hauptzweck ist jedoch eine Versteifung der Schaltklappe 2.

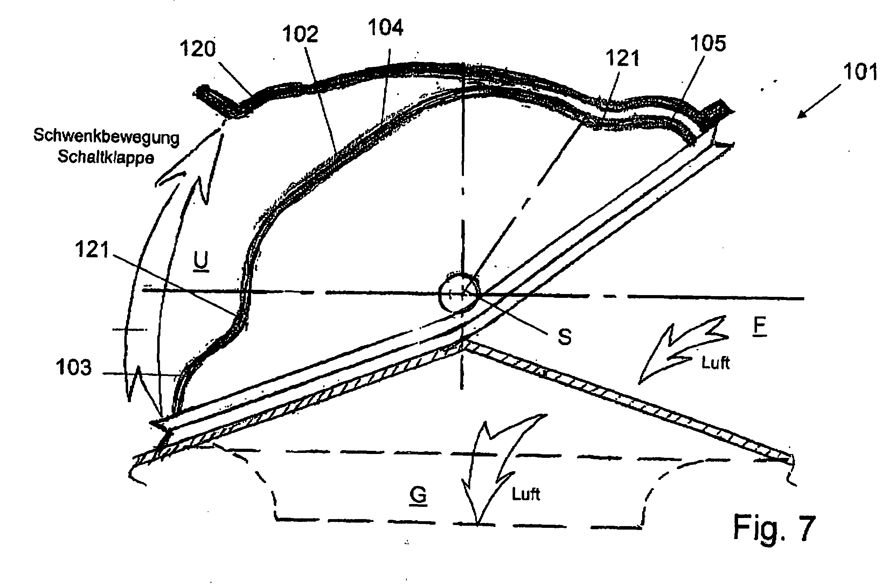

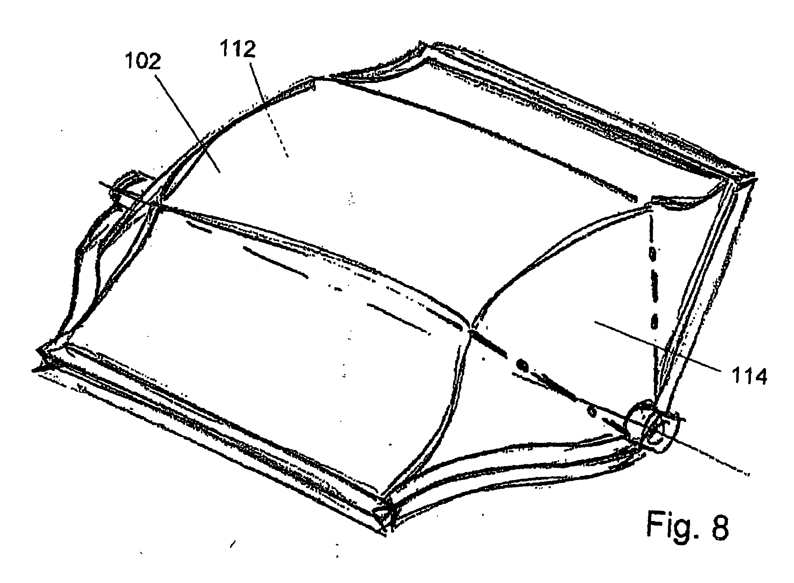

In den Figuren 7 und 8 ist eine nicht erfindungsgemäße Luftstromschalteinrichtung 101 dargestellt, wobei Umluft aus einem Umluft-Luftkanal U und/oder Frischluft aus einem Frischluft-Luftkanal F über einen gemeinsamen, nach der um eine Schwenkachse S um einen Winkel von vorliegend ca. 60° verschwenkbare Schaltklappe 102 angeordneten Gebläse-Luftkanal G dem Gebläse (nicht dargestellt) zugeführt werden kann. In Fig. 7 ist der Zustand 100% Frischluft dargestellt, d.h. der Frischluft-Luftkanal F ist vollständig geöffnet und der Umluft-Luftkanal U ist vollständig geschlossen, wobei die Schaltklappe 102 mit ihrem nach außen vorstehenden ersten Rand an einer entsprechenden Anlagefläche des Luftführungsgehäuses 120 anliegt.

Die Schaltklappe 102 weist - entsprechend der Schaltklappe 1 des ersten Ausführungsbeispiels - drei Segmente 103, 104 und 105 auf, die jedoch nicht durch überstehende Ränder scharf voneinander getrennt sind, sondern vielmehr in Form von abgerundeten Übergangsbereichen 121 ineinander übergehen. Jedes der drei Segmente 103, 104 und 105 weist einen kurvenförmigen Querschnitt auf, wobei sämtliche Krümmungsmittelpunkte der Segmente 103, 104, 105 schwenkachsenseitig der Schaltklappe 1 liegen, jedoch nicht mit der Schwenkachse S zusammenfallen. Die beiden äußeren Segmente 103 und 105 sind spiegelsymmetrisch bezüglich der Mittellängsebene, in der auch die Schwenkachse S liegt, ausgebildet. Das mittlere, zweite Segment 104 ist ebenfalls spiegelsymmetrisch bezüglich der Mittellängsebene und weist auf den äußeren Seiten, d.h. benachbart zu den Übergangsbereichen 121, jeweils die zuvor genannte Krümmung auf, ist im mittleren Bereich jedoch abgeflacht, vorliegend nahezu als Ebene, ausgebildet. Die Krümmungsmittelpunkte der Übergangsbereiche 121 liegen hingegen auf der Außenseite der Schaltklappe 102.

Das erste und das dritte Segment 103 und 105 nehmen vorliegend jeweils einen Winkel von ca. 25° und das mittlere, zweite Segment 104 einen Winkel von ca. 125° ein, so dass die Schaltklappe 102 insgesamt einen Winkel von ca. 175° aufweist. Der Winkel der Schaltklappe 102 plus der maximale Schwenkwinkel der Schaltklappe betragen zusammen ca. 230° und somit über 180°.

Wird ein Kreis mit dem Mittelpunkt auf der Schwenkachse S gezogen, der tangential nahe am mittleren, zweiten Segment 104 an den Übergangsbereichen 121 anliegt, so entspricht vorliegend der Winkel zwischen den Schnittpunkten von Schaltklappe 102 und Kreis im Wesentlichen dem maximalen Schwenkwinkel der Schaltklappe 102.

Auf beiden äußeren Seiten der Segmente 103, 104 und 105 sind senkrecht zur Schwenkachse S angeordnete Ebenen 112, 114 vorgesehen, vorliegend ohne Abschrägung, Dabei ist die Schaltklappe 102 spiegelsymmetrisch zur Mittelquerebene, die senkrecht zur Schwenkachse S verläuft, ausgebildet

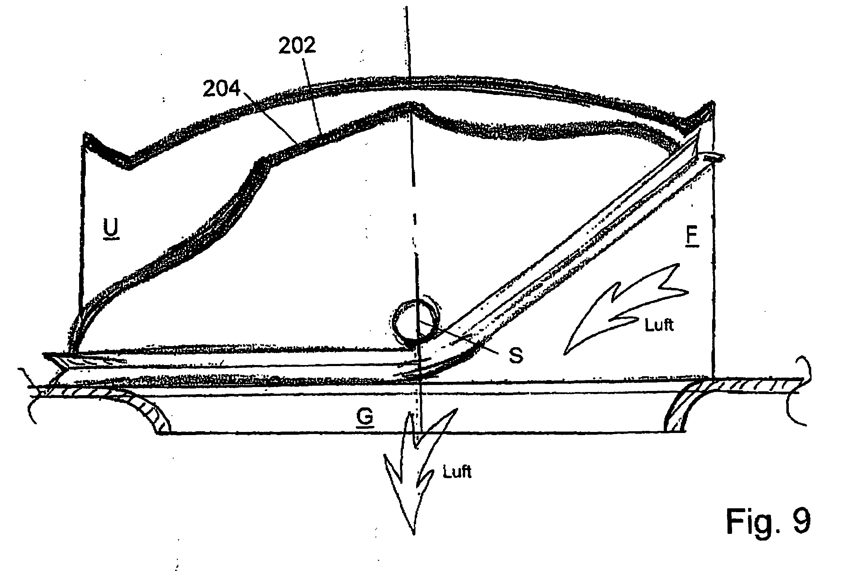

Fig. 9 zeigt ein weiteres, nicht erfindungsgemäßes Beispiel , welches im Wesentlichen dem vorherigen Beispiel entspricht, jedoch ist die Luftführungsgehäusegeometrie so, dass der Frischluft-Luftkanal F und der Umluft-Luftkanal U miteinander fluchten und die beiden Luftkanäle F, U senkrecht in den Gebläse-Luftkanal G münden, wobei die ebenfalls vollständig symmetrisch ausgebildete Schaltklappe 202 mittig vor der Mündung angeordnet ist. Der Winkel der Schaltklappe 202 plus der maximale Schwenkwinkel der Schaltklappe betragen zusammen 180°.

Im Unterschied zur Schaltklappe 102 sind die Übergangsbereiche der Schaltklappe 202 deutlich größer ausgebildet, wobei der Übergang zum mittleren, zweiten Segment 204 in einem sehr kleinen Radius erfolgt und das zweite Segment 204 ansonsten eben ausgebildet ist. Wird ein Kreis mit dem Mittelpunkt auf der Schwenkachse S gezogen, der tangential nahe am mittleren, zweiten Segment 204 an den Übergangsbereichen anliegt, so entspricht vorliegend der Winkel zwischen den Schnittpunkten von Schaltklappe 202 und Kreis im Wesentlichen dem maximalen Schwenkwinkel der Schaltklappe 202.

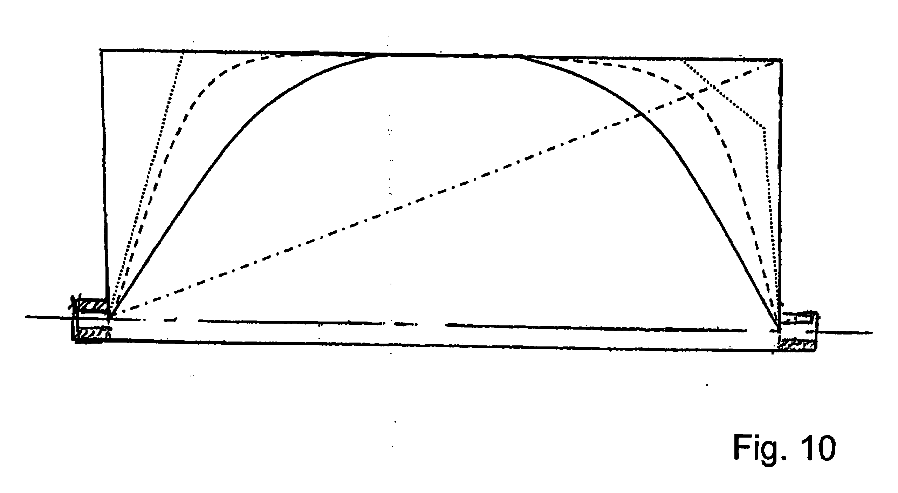

Fig. 10 zeigt verschiedene mögliche Verläufe eines Segments im Längsschnitt. Neben einem rechteckförmigen oder dreieckförmigen Querschnitt, d.h. einer auf einem Zylindersektor oder einem Kegelsektor beruhenden Basisform mit entsprechend ausgebildeten einzelnen Segmenten, sind auch nahezu beliebige Krümmungen und/oder Winkel möglich.

## Patentansprüche

1. Luftstromschalteinrichtung zum Schalten einer einen ersten Luftkanal (G) mit einem zweiten Luftkanal (F) und einem dritten Luftkanal (U) verbindenden Verbindungsöffnung, insbesondere in einer Heizungs-, Lüftungs- oder Klimaanlage für den Innenraum eines Kraftfahrzeugs, mit einer um eine Schwenkachse (S) schwenkbar gelagerten Schaltklappe(2; 102; 202), wobei die Schaltklappe (2; 102; 202) so angeordnet ist, dass in einer ersten Endstellung der Schaltklappe (2; 102; 202) der erste Luftkanal (G) mit dem zweiten Luftkanal (F) kommuniziert, während der dritte Luftkanal (U) gesperrt ist, in einer zweiten Endstellung der Schaltklappe (2; 102; 202) der erste Luftkanal (G) mit dem dritten Luftkanal (U) kommuniziert, während der zweite Luftkanal (F) gesperrt ist, und in wenigstens einer zwischen den Endstellungen liegenden Zwischenstellung der Schaltklappe (2) der erste Luftkanal (G) sowohl mit dem zweiten als auch mit dem dritten Luftkanal (F bzw. U) in einem einstellbaren Verhältnis kommuniziert, wobei die Schaltklappe (2; 102; 202) durch mindestens drei Segmente (3, 4, 5; 103, 104, 105; 204) gebildet ist, die in einer der Endstellungen den zweiten oder dritten Luftkanal (F oder U) zumindest bereichsweise gegenüber den anderen beiden Luftkanälen (U oder F und G) verschließen, wobei dieser zweite oder dritte Luftkanal (U oder F) durch zumindest eine Teilfläche der Schaltklappe (2; 102; 302) vollständig verschlossen ist, und sämtliche Segmente (3, 4, 5; 103, 104, 105; 204) durch Ebenen und/oder Kürvenflächen, deren Krümmungsmittelpunkte nicht auf die Schwenkachse (S) der Schaltklappe fallen, gebildet sind, **dadurch gekennzeichnet, dass** im Bereich des Übergangs von einem Segment (3; 4) zu einem anderen Segment (4; 5) ein nach außen überstehender Rand (7; 10) vorgesehen ist und mindestens ein äußeres Segmentende nach außen in radialer Richtung überstehend als Rand (6) ausgebildet ist

2. Luftstromschalteinrichtung nach Anspruch 1, **dadurch gekennzeichnet, dass** zwischen zwei Segmenten (103, 104, 105; 204) ein Übergangsbereich (121) vorgesehen ist, welcher eine Krümmung aufweist, deren Mittelpunkt nicht mit der Schwenkachse (S) zusammenfällt.

3. Luftstromschalteinrichtung nach einem der vorhergehenden Ansprüche, **dadurch gekennzeichnet, dass** mindestens eines der Segmente (3, 4, 5) auch entlang Schnittebenen, von denen die Schwenkachse (S) Teil ist, eine Krümmung und/oder einen nicht parallelen Verlauf bezüglich der Schwenkachse (S) aufweist.

4. Luftstromschalteinrichtung nach einem der vorhergehenden Ansprüche, **dadurch gekennzeichnet, dass** mindestens ein Segment (3) und/oder Übergangsbereich (121) nach außen gekrümmt ausgebildet ist.

5. Luftstromschalteinrichtung nach einem der vorhergehenden Ansprüche, **dadurch gekennzeichnet, dass** mindestens ein Segment (4, 5; 104; 204) über zumindest einen wesentlichen Bereich seiner Fläche eben ausgebildet ist.

6. Luftstromschalteinrichtung nach einem der vorhergehenden Ansprüche, **dadurch gekennzeichnet, dass** die Schaltklappe (2) asymmetrisch bezüglich der Mittelebene senkrecht zur Schwenkachse (S) ausgebildet ist.

7. Luftstromschalteinrichtung nach einem der vorhergehenden Ansprüche, **dadurch gekennzeichnet, dass** die Schaltklappe (2) mindestens eine Abschrägung (13) aufweist.

8. Luftstromschalteinrichtung nach einem der vorhergehenden Ansprüche, **dadurch gekennzeichnet, dass** mindestens eine versteifende Rippe (8, 9) vorgesehen ist.

9. Luftstromschalteinrichtung nach Anspruch 8, **dadurch gekennzeichnet, dass** die versteifende Rippe (8, 9) schwenkachsenseitig an der Schaltklappe (2) vorstehend angeordnet ist.

10. Luftstromschalteinrichtung nach Anspruch 8 oder 9, **dadurch gekennzeichnet, dass** die versteifende Rippe (8, 9) parallel und/oder senkrecht zur Schwenkachse (S) verlaufend ausgebildet ist.

11. Heizungs-, Lüftungs- oder Klimaanlage für den Innenraum eines Kraftfahrzeugs **gekennzeichnet durch** eine Luftstromschalteinrichtung (1) gemäß einem der Ansprüche 1 bis 10.

## Claims

1. An air stream switching device for switching a connecting opening connecting a first air duct (G) to a second air duct (F) and a third air duct (U), in particular in a heating, ventilation or air conditioning system for the interior of a motor vehicle, comprising a switching flap (2; 102; 202) supported pivotably about a pivot axis (S), the switching flap (2; 102; 202) being disposed such that in a first end position of the switching flap (2; 102; 202) the first air duct (G) communicates with the second air duct (F), while the third air duct (U) is blocked, in a second end position of the switching flap (2; 102; 202) the first air duct (G) communicates with the third air duct (U), while the second air duct (F) is blocked, and in at least one intermediate position of the switching flap (2) that is between the end positions the first air duct (G) communicates both with the second and the third air ducts (F and U) in an adjustable ratio, the switching flap (2; 102; 202) being formed by at least three segments (3, 4, 5; 103, 104, 105; 204) which in one of the end positions close the second or third air duct (F or U) at least regionally with respect to the other two air ducts (U or F and G), this second or third air duct (U or F) being completely closed by at least one partial surface of the switching flap (2; 102; 302) and all segments (3, 4, 5; 103, 104, 105; 204) being formed by planes and/or curved surfaces, the centers of curvature of which do not coincide with the pivot axis (S) of the switching flap, **characterized in that** an outwardly protruding edge (7; 10) is provided in the region of the transition from one segment (3; 4) to another segment (4; 5) and at least one outer segment end is formed as an edge (6), protruding outwardly in the radial direction.

2. The air stream switching device according to claim 1, **characterized in that** a transition region (121) is provided between two segments (103, 104, 105; 204), which has a curvature, the center of which does not coincide with the pivot axis (S).

3. An air stream switching device according to any one of the preceding claims, **characterized in that** at least one of the segments (3, 4, 5) has a curvature and/or a course that is not parallel with respect to the pivot axis (S), even along cutting planes of which the pivot axis (S) is part.

4. An air stream switching device according to any one of the preceding claims, **characterized in that** at least one segment (3) and/or transition region (121) has an outwardly curved design.

5. An air stream switching device according to any one of the preceding claims, **characterized in that** at least one segment (4, 5; 104; 204) is configured in a planar manner over at least a substantial region of the surface thereof.

6. An air stream switching device according to any one of the preceding claims, **characterized in that** the switching flap (2) has an asymmetrical design with respect to the center plane perpendicular to the pivot axis (S).

7. An air stream switching device according to any one of the preceding claims, **characterized in that** the switching flap (2) has at least one bevel (13).

8. An air stream switching device according to any one of the preceding claims, **characterized in that** at least one reinforcing rib (8, 9) is provided.

9. The air stream switching device according to claim 8, **characterized in that** the reinforcing rib (8, 9) is disposed on the switching flap (2) in a protruding manner on the side of the pivot axis.

10. The air stream switching device according to claim 8 or 9, **characterized in that** the reinforcing rib (8, 9) is configured to run parallel and/or perpendicular to the pivot axis (S).

11. A heating, ventilation or air conditioning system for the interior of a motor vehicle, **characterized by** an air stream switching device (1) according to any one of claims 1 to 10.

## Revendications

1. Dispositif de commande de flux d'air servant à commander une ouverture de communication reliant un premier conduit d'air (G) à un deuxième conduit d'air (F) et à un troisième conduit d'air (U), en particulier dans un système de chauffage, de ventilation ou de climatisation pour l'habitacle d'un véhicule automobile, comprenant un volet de commande (2 ; 102 ; 202) monté de façon pivotante autour d'un axe de pivotement (S), où le volet de commande (2 ; 102 ; 202) est disposé de manière telle, que dans une première position de fin de course du volet de commande (2 ; 102 ; 202), le premier conduit d'air (G) communique avec le deuxième conduit d'air (F), tandis que le troisième conduit d'air (U) est fermé, dans une deuxième position de fin de course du volet de commande (2 ; 102 ; 202), le premier conduit d'air (G) communique avec le troisième conduit d'air (U), tandis que le deuxième conduit d'air (F) est fermé et, dans au moins une position intermédiaire du volet de commande (2) se situant entre les positions de fin de course, le premier conduit d'air (G) communique aussi bien avec le deuxième qu'avec le troisième conduit d'air (F ou U), suivant un rapport de proportion réglable, où le volet de commande (2 ; 102 ; 202) est formé par au moins trois segments (3, 4, 5 ; 103, 104, 105 ; 204) qui, dans l'une des positions de fin de course, ferment le deuxième ou le troisième conduit d'air (F ou U), au moins partiellement, par rapport à l'autre des deux conduits d'air (U ou F et G), où ce deuxième ou troisième conduit d'air (F ou U) est complètement fermé par au moins une surface partielle du volet de commande (2 ; 102 ; 302), et tous les segments (3, 4, 5 ; 103, 104, 105 ; 204) sont formés par des plans et / ou surfaces courbes dont les centres de courbure ne coïncident pas avec l'axe de pivotement (S) du volet de commande,
**caractérisé en ce que**, dans la zone de transition d'un segment (3 ; 4) à un autre segment (4 ; 5), il est prévu un bord (7 ; 10) faisant saillie vers l'extérieur, et au moins une extrémité extérieure du segment est configurée comme un bord (6) faisant saillie vers l'extérieur, dans le sens radial.

2. Dispositif de commande de flux d'air selon la revendication 1, **caractérisé en ce qu'**il est prévu, entre deux segments (103, 104, 105 ; 204), une zone de transition (121) qui présente une courbure dont le centre ne coïncide pas avec l'axe de pivotement (S).

3. Dispositif de commande de flux d'air selon l'une ou l'autre des revendications précédentes, **caractérisé en ce qu'**au moins l'un des segments (3, 4, 5), également le long de plans de coupe dont fait partie l'axe de pivotement (S), présente une courbure et / ou un profil non parallèle par rapport à l'axe de pivotement (S).

4. Dispositif de commande de flux d'air selon l'une quelconque des revendications précédentes, **caractérisé en ce qu'**au moins un segment (3) et / ou une zone de transition (121) est configuré(e) de façon courbée vers l'extérieur.

5. Dispositif de commande de flux d'air selon l'une quelconque des revendications précédentes, **caractérisé en ce qu'**au moins un segment (4, 5 ; 104 ; 204) est configuré en étant plan sur au moins une zone importante de sa surface.

6. Dispositif de commande de flux d'air selon l'une quelconque des revendications précédentes, **caractérisé en ce que** le volet de commande (2) est configuré de façon asymétrique par rapport au plan médian perpendiculaire à l'axe de pivotement (S).

7. Dispositif de commande de flux d'air selon l'une quelconque des revendications précédentes, **caractérisé en ce que** le volet de commande (2) présente au moins une partie chanfreinée (13).

8. Dispositif de commande de flux d'air selon l'une quelconque des revendications précédents, **caractérisé en ce qu'**il est prévu au moins une nervure de renfort (8, 9).

9. Dispositif de commande de flux d'air selon la revendication 8, **caractérisé en ce que** la nervure de renfort (8, 9) est disposée en faisant saillie sur le volet de commande (2), côté axe de pivotement.

10. Dispositif de commande de flux d'air selon la revendication 8 ou 9, **caractérisé en ce que** la nervure de renfort (8, 9) est configurée en s'étendant parallèlement et / ou perpendiculairement à l'axe de pivotement (S).

11. Système de chauffage, de ventilation ou de climatisation pour l'habitacle d'un véhicule automobile, **caractérisé par** un dispositif de commande de flux d'air (1) selon l'une quelconque des revendications 1 à 10.
